# EUROPEAN PATENT APPLICATION

(11) **EP 4 421 659 A1**
(43) Date of publication of application: **28.08.2024**
(21) Application number: 24158564.5
(22) Date of filing: 20.02.2024
(51) Int. Cl.: G06F 16/9535, G06F 16/33

(54) **ENHANCED SEARCH PERFORMANCE USING CONTEXTUAL ASPECT RELATEDNESS**

(30) Priority: 21.02.2023 US 202318172075
(71) Applicant: eBay Inc., San Jose, CA 95125 (US)
(72) Inventor: BELLAM, Praveen Kumar, SAN JOSE, 95125 (US); WU, Chih-Liang, SAN JOSE, 95125 (US); LESHCHUK, Irina, SAN JOSE, 95125 (US); KHAN, Ishita Kamal, SAN JOSE, 95125 (US); MANDAL, Aritra, SAN JOSE, 95125 (US); DONLEY, Mitchell Reid, SAN JOSE, 95125 (US); WU, Zhe, SAN JOSE, 95125 (US)
(74) Representative: Müller-Boré & Partner Patentanwälte PartG mbB

(57) **Abstract**

The technology disclosed herein relates to identifying an aspect from a search query based on using a multipartite graph generated using past user behavior and a node embedding algorithm for determining vector representations of nodes of the multipartite graph. For example, nodes of the multipartite graph can include nodes for prior search queries, items or item listings associated with the prior search queries, and one or more of an aspect or category of the items or item listings. In embodiments, the multipartite graph has dynamic edges between the nodes for the prior search queries and the items or item listings. In embodiments, a query expansion is performed based on identifying the aspect using the multipartite graph and node embedding algorithm. In embodiments, search results are provided based on identifying the aspect and performing the query expansion. For example, one or more identified aspects can be provided as selectable options.

## Description

### BACKGROUND

Search systems provide a useful tool for locating search query results. For example, an item listing can be located (e.g., within a database) based on a search query. Item listings are sometimes provided by a seller, and may also include an image or video for example. Search results provided by search systems can be limited in scope when only considering a current search query (e.g., the words entered into a search bar) for providing search results. With the ever-increasing use of search systems for retrieving electronically stored information, improvements in computing operations for search systems can provide more efficient and accurate processing of stored data, and improvements to user navigation in search systems is desirable.

### SUMMARY

At a high level, aspects described herein relate to providing search results that more accurately reflect a user's intent based on past user behavior and based on search expansion via aspects identified based at least in part on the past user behavior. For example, a search engine may receive a search query. Additionally, an aspect corresponding to the search query is identified based on using a multipartite graph (e.g., a tripartite graph) generated using the past user behavior (e.g., that corresponds to prior search queries, items associated with the prior search queries, and aspects associated with the items) and a node embedding algorithm (e.g., node2vec) that determines vector representations of nodes of the multipartite graph. For example, the aspect can be identified based on vector representations for each of the prior search queries, items associated with the prior search queries, and aspects associated with the items, the vector representations being generated using the multipartite graph and the node embedding algorithm. Search results are then generated based on the aspect identified.

Past user behavior may include prior search queries, purchases, clicks (e.g., a selection of an item listing or a selection of an image within an item listing), other interaction data (e.g., scrolling, hovering, pauses between scrolling that are over a threshold period of time), ratings provided for prior purchases, applied filters to prior search queries, other types of past user behavior, or one or more combinations thereof. The past user behavior can be received by a user device, received by a server, stored at one or more databases, received by one or more components of a search system, or one or more combinations thereof. In some embodiments, the past user behavior is stored at one or more databases with an associated timestamp (e.g., an actual time or relative time), a label, a sequence number for ordering the past user behavior, or one or more combinations thereof. In some embodiments, a user is a human user, a machine user, another type of user, or one or more combinations thereof.

Applying the node embedding algorithm to learn node embeddings in the multipartite graph allows for learned relations among prior search queries, items or item listings associated with the queries, and aspects associated with the items or item listings, for example. In some embodiments, the multipartite graph is generated based on categories (e.g., leaf categories) corresponding to the items or item listings. As such, the learned relations between queries and items may be based on a particular leaf category. Further, based on the learned node embeddings, a K-Nearest Neighbor algorithm may be applied to determine a K closest neighbor of the vector representations. For example, distances between values corresponding to the vector representations can provide a measure of similarity between two vector representations. In some embodiments, a distance can be compared to a threshold.

Search results can be generated and provided based on identifying the aspect using the multipartite graph and node embedding algorithm (and in some embodiments, the K-Nearest Neighbor algorithm). For example, in some embodiments, the search results are generated and provided based on performing a query expansion using the aspect identified. Additionally or alternatively, one or more search result groupings can be provided based on the aspect identified. For example, one or more identified aspects can be provided as selectable options, and a user may select one of the selectable options, such that the search results are provided based on the selection. In some embodiments, a category corresponding to the search query can additionally be provided as a selectable option. Continuing the example, the search results can be provided based on performing a query expansion using a selected category that was provided as a selectable option. As such, search results can be provided in an organized manner to facilitate improved item listing navigation, for example.

This summary is intended to introduce a selection of concepts in a simplified form that is further described in the Detailed Description section of this disclosure. The Summary is not intended to identify key or essential features of the claimed subject matter, nor is it intended to be an aid in determining the scope of the claimed subject matter. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 is a block diagram of an example operating environment suitable for employing an aspect identification module, in accordance with an embodiment described herein;
FIG. 2 is an example operating environment including a tripartite graph and node embedding algorithm for identifying an aspect associated with a search query, in accordance with an embodiment described herein;
FIG. 3 includes an example data table associated with generating the multipartite graph, in accordance with an embodiment described herein;
FIG. 4 illustrates a t-SNE graph corresponding to prior search queries and related aspects for a particular category, in accordance with an embodiment described herein;
FIG. 5 illustrates another t-SNE graph corresponding to prior search queries and related aspects for another category, in accordance with an embodiment described herein;
FIG. 6 provides an example display for providing search results based on identifying an aspect using a multipartite graph and node embedding algorithm, in accordance with an embodiment described herein;
FIG. 7 provides another example display for providing search results based on identifying an aspect using a multipartite graph and node embedding algorithm, in accordance with an embodiment described herein;
FIG. 8 provides yet another example display for providing search results based on identifying an aspect using a multipartite graph and node embedding algorithm, in accordance with an embodiment described herein;
FIG. 9 is an example flowchart illustrating an example method for providing search results based on identifying an aspect using a multipartite graph and node embedding algorithm, in accordance with an embodiment described herein; and
FIG. 10 is an example computing device suitable for implementing the described technology, in accordance with an embodiment described herein.

### DETAILED DESCRIPTION

Search systems typically support the storage of item data in databases, and the retrieval of the stored item data based on queries received at a search bar, for example. Building, utilizing, and maintaining a search infrastructure can present technical challenges relating to identifying and retrieving particular data based on a search query that accurately relates to and captures the intent of the user providing the search query. For example, some search systems merely identify and retrieve data based solely on one or more words entered into a search bar, which does not wholly and accurately reflect the intent of the user. This can limit the user's ability to receive search results closely tailored to the user's intent.

One shortcoming of using this search method described above includes adversely affected computer network communications. For example, each time an additional search term or filter is applied, associated contents or payload (e.g., payload associated with metadata from the filter) is increased due to the additional processing needed to analyze an associated database. As such, throughput and latency can result from this additional processing and metadata being transmitted over the network. In some instances, this additional processing can also increase storage device I/O (e.g., excess physical read/write head movements on non-volatile disk) when stored catalog items are incorrectly or inaccurately identified or labeled, since unnecessary information is being processed or stored. In doing so, a computing system often has to reach out to the storage device to perform a read or write operation, which is time consuming, error prone, and can eventually wear on components, such as a read/write head.

Furthermore, some prior system architectures include machine learning models that have not been trained on particular aspects associated with an item or item listing, or models that have not been trained on one or more combinations of aspects of the item or item listing. For example, prior systems have not been trained based on identifying an aspect using both a multipartite graph (such as a tripartite graph, for example) and a node embedding algorithm. More specifically, the prior system architectures are not trained based on identifying aspects using past user behavior. As a result, these prior systems can mischaracterize an item, identify an inaccurate item for a search query, and provide search results that are not tailored to the user's intent.

Accordingly, it is desirable for search systems to more accurately identify and determine aspects of items or item listings (e.g., related to goods or services) to provide search results that mostly closely align with the true intent of the user (e.g., human user, a machine user, another type of user, or one or more combinations thereof) providing the search query. For example, it is beneficial to provide a system that more rapidly identifies the more accurate search results using the determined aspects of the items or item listings. It is also beneficial to provide a system that can respond and adapt to changes in databases or the online marketplace, for example, by performing a query expansion using the identified aspects.

The technology described herein achieves these goals and provides various improvements to the problems specific to the prior search systems discussed above. For example, in embodiments of the present disclosure, a process begins by receiving a search query (e.g., at a search engine and received from a user). One or more aspects can be identified based on receiving the search query, and the one or more aspects are identified by using a multipartite graph (e.g., a tripartite graph) and a node embedding algorithm. The multipartite graph can be generated using past user behavior. For example, the past user behavior can include prior search queries, purchases, clicks (e.g., a selection of an item listing or a selection of an image within an item listing), other interaction data (e.g., scrolling, hovering, pauses between scrolling that are over a threshold period of time), ratings provided for prior purchases, applied filters to prior search queries, other types of past user behavior, or one or more combinations thereof. Search results can be provided based on the one or more identified aspects. While reference may be made to an online marketplace utilizing the disclosed technology to identify and retrieve items and item listings, it will be understood that the technology discussed herein may be used in a more general context of an online search engine (e.g., that identifies and retrieves web results, that provides answers in response to a search query, that provides related searches, that provides or identifies advertisements, that provides other types of results, or one or more combinations thereof).

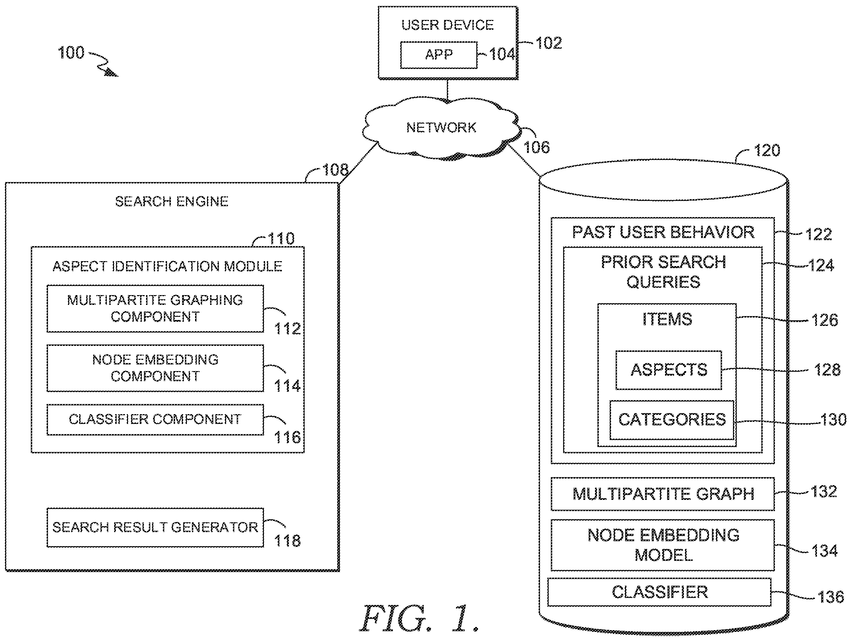

In some embodiments, one or more aspects identified by the technology provided herein may be weighted more heavily than others (e.g., based on user-provided weights or weights determined by the search engine corresponding to the aspect identification module 110 of FIG. 1). Further, an "item listing" referred to herein may include a title, one or more images, one or more videos, metadata, an item description, other item listing data, or one or more combinations thereof. Furthermore, an "aspect" referred to herein may include one or more words of a particular item description (e.g., metal, sterling silver, reversible, green, accent, accent and button, necklace, brand), a value or alphanumeric associated with the item description (e.g., barcode or product identifier), one or more characters or values associated with the title, one or more characters or values associated with an image of an item listing (e.g., a color of the item identified within the image), other types of aspects, or one or more combinations thereof.

As such, by providing search results based on using the multipartite graph and node embedding algorithm to identify an aspect for a search query and by using past user behavior to identify the aspect, the technology disclosed herein provides a faster, more accurate, and more computationally efficient method compared to existing search systems. For instance, the technology disclosed herein provides a faster and more computationally efficient method compared to the existing methods that increase the contents or payload based on running excessive search queries. As another example, the technology disclosed herein provides a more computationally efficient method compared to existing search systems that have not been trained on particular identified aspects associated with an item or item listing.

Having provided some example scenarios, a technology suitable for performing these examples is described in more detail with reference to the drawings. It will be understood that additional systems and methods for providing the improved search results and navigation can be derived from the following description of the technology.

Turning now to FIG. 1, FIG. 1 illustrates example operating environment 100 in which implementations of the present disclosure may be employed. In particular, FIG. 1 illustrates a high-level architecture of operating environment 100 having components in accordance with implementations of the present disclosure. The components and architecture of FIG. 1 are intended as examples, as noted toward the end of the Detailed Description.

Example operating environment 100 includes user device 102, network 106, search engine 108, and database 120. Search engine 108 can communicate, using network 106, with user device 102 and database 120. Search engine 108 is illustrated as hosting components of aspect identification module 110 and search result generator 118.

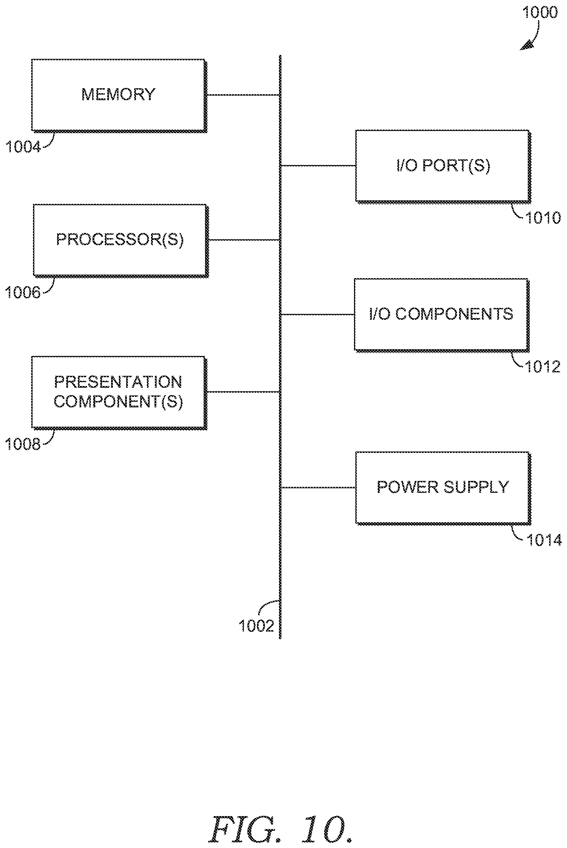

The user device 102 is a device that has the capability of using a wireless communications network (e.g., network 106), and may also be referred to as a "computing device," "mobile device," "user equipment," "wireless communication device," or "UE." A user device, in some embodiments, may take on a variety of forms, such as a PC, a laptop computer, a tablet, a mobile phone, a PDA, a server, or any other device that is capable of communicating with other devices (e.g., by transmitting or receiving a signal) using a wireless communication. Broadly, the user device 102 can include computer-readable media storing computer-executable instructions executed by at least one computer processor. The user device 102 may be operated by a user, such as one or more of a person, machine, robot, other user device operator, or one or more combinations thereof. One example of a user device includes computing device 1000 described herein with reference to FIG. 10.

A user device may additionally or alternatively include internet-of-things devices, such as one or more of the following: a sensor, controller (e.g., a lighting controller, a thermostat), appliances (e.g., a smart refrigerator, a smart air conditioner, a smart alarm system), other internet-of-things devices, or one or more combinations thereof. Internet-of-things devices may be stationary, mobile, or both. In some embodiments, an internet-of-things device is associated with a vehicle (e.g., a video system in a car capable of receiving media content stored by a media device in a house when coupled to the media device via a local area network). In some embodiments, the internet-of-things device includes a medical device, a location monitor, a clock, other wireless communication devices, or one or more combinations thereof.

User device 102 can interact with search engine 108 for employment of the aspect identification module 110. User device 102 can employ computer-executable instructions of an application 104, which can be hosted in part or in whole at user device 102, or remote from user device 102. That is, the instructions can be embodied on one or more applications. Application 104 is generally capable of facilitating the exchange of information between components of operating environment 100. The application 104 may be embodied as a web application that runs in a web browser. This may be hosted at least partially on a server-side of operating environment 100. The application 104 can comprise a dedicated application, such as an application having analytics functionality. In some cases, the application 104 is integrated into the operating system (e.g., as a service or program). It is contemplated that "application" be interpreted broadly.

As illustrated, components or engines of operating environment 100, including user device 102, may communicate using network 106. Network 106 can facilitate wireless telecommunication services provided by one or more telecommunication network providers. Wireless telecommunication services may include, but are not limited to, the transfer of information via radio waves (e.g., Bluetooth^{®}), satellite communication, infrared communication, microwave communication, Wi-Fi, mmWave communication, and mobile communication. For example, the network 106 can provide wireless telecommunication services comprising one or more of a voice service, a message service (e.g., SMS messages, MMS messages, instant messaging messages, an EMS service messages), a data service, other types of wireless telecommunication services, or one or more combinations thereof.

Embodiments of the present technology may be used with different wireless telecommunication technologies or standards, including, but not limited to, CDMA 1xAdvanced, GPRS, Ev-DO, TDMA, GSM, WiMax technology, LTE, LTE Advanced, other technologies and standards, or one or more combinations thereof. For example, the network 106 can include a 1x circuit voice, a 3G network (e.g., CDMA, CDMA2000, WCDMA, GSM, UMTS), a 4G network (WiMAX, LTE, HSDPA), a 5G network, a 6G network, another generation network, or one or more combinations thereof. In embodiments, network 106 can include one or more networks (e.g., public network or virtual private network "VPN"). As an example, network 106 may include, without limitation, one or more local area networks (LANs), wide area networks (WANs), another type of area network, or one or more combinations thereof. Additionally, one or more portions of the network 106 may be an ad hoc network, an intranet, an extranet, a wireless LAN (WLAN), a wireless WAN (WWAN), a metropolitan area network (MAN), a portion of the Internet, a portion of the Public Switched Telephone Network (PSTN), a cellular telephone network, a wireless network, a Wi-Fi network, a WiMAX network, another type of network, or one or more combinations thereof.

Search engine 108 generally supports the aspect identification module 110. Search engine 108 includes one or more processors, and one or more computer-readable media. One example search engine suitable for use may include one or more aspects of computing device 1000 of FIG. 10. Additionally, the computer-readable media includes computer-executable instructions executable by the one or more processors. The instructions may optionally implement one or more components of the aspect identification module 110, such as multipartite graphing component 112, node embedding component 114, or classifier component 116, for example. In some embodiments, the search engine 108 may comprise an application program interface server, a web server, and application server, another type of server, or one or more combinations thereof. For example, the application server can host one or more marketplace applications, one or more payment applications, another type of application, or one or more combinations thereof. In some embodiments, search engine 108 may provide computing resources that are available as one or more bare metal resources or as one or more virtual machine instances, such as a rendition switching virtual machine (RSVM) instance, for example.

As with other components of FIG. 1, while search engine 108 is illustrated as a single engine, it can include one or more servers, and various components of search engine 108 can be locally integrated within the one or more servers or may be distributed in nature. Further, while illustrated in FIG. 1 as separate components, in other embodiments, multipartite graphing component 112 and node embedding component 114 are part of a single component used to identify an aspect for a search query received at search engine 108, for example. Accordingly, the elements described in relation to FIG. 1 are functional entities that may be implemented as discrete or distributed components or in conjunction with other components, and in any suitable combination and location. Various functions described herein are being performed by one or more entities and may be carried out by hardware, firmware, or software. For instance, various functions may be carried out by a processor executing computer-executable instructions stored in memory.

Search engine 108 can receive a search query (e.g., from user device 102), such as a textual input into a search bar, an image input, a video input, or an audio input, another type of input, or one or more combinations thereof, for example. In some embodiments, the search query includes unstructured text of one or more text strings (e.g., a text string having one or more n-grams) or unstructured data. In general, any character, numeric, or alphanumeric string may be received by the search engine 108 for the search query. In some embodiments, search engine 108 receives a portion of a search query, such as a portion of a word or one word of a plurality of words, for example.

Based on receiving the search query at the search engine 108, aspect identification module 110 identifies an aspect corresponding to the search query using at least a multipartite graphing component 112 and a node embedding component 114. In some embodiments, the aspect is determined by also using a classifier component 116. For example, the multipartite graphing component 112 generates a multipartite graph 132 (e.g., a tripartite graph) using past user behavior 122 of database 120. Database 120 can generally store information including data, computer instructions (e.g., software program instructions, routines, or services), or models used in embodiments of the described technologies. Although depicted as a single component, database 120 may be embodied as one or more data stores or may be in the cloud. One example of database 120 includes memory 1004 of FIG. 10. As another example, database 120 may be coupled to an application server and may facilitate access to a plurality of databases, such as a training database, a past user behavior database, an index database, a user profile database, another type of database, or one or more combinations thereof.

In embodiments, the past user behavior 122 can be stored based on one or more devices of a particular user, a user profile of the user, user login-credentials, a physical address corresponding to the user (e.g., a shipping address, an address associated with payment information, a GPS location corresponding to a user device receiving a search query), another type of user identifier, or one or more combinations thereof. To illustrate, prior purchases made from a particular user device or with particular user login-credentials can be stored as past user behavior for that user within database 120. Continuing the example, the past user behavior 122 can be organized and stored based on prior search queries 124. For example, items or item listings identified from the prior search queries can be stored at items 126, the aspects associated with the items or item listings identified from the prior search queries can be stored at aspects 128, and categories associated with the items or item listings identified from the prior search queries can be stored at 130. In embodiments, an item may be a good, service (e.g., a service provided by software), tangible, intangible (e.g., computer software), another type of item, or one or more combinations thereof. In some embodiments, one or more categories stored at 130 are leaf categories (which are not further divided into additional sub-categories).

As a non-limiting and illustrative example, the multipartite graphing component 112 generates a multipartite graph 132 based on the past user behavior 122 (e.g., one or more of the prior search queries 124, the items or item listings stored at items 126, the aspects 128, the categories 130, other types of past user behavior, or one or more combinations thereof). The generated multipartite graph 132 illustrates representations of the relationships among the prior search queries, the items or item listings corresponding to the prior search queries, and the aspects corresponding to the items or item listings. For example, if the user previously queried "red velvet shorts for women," the red velvet items and item listings from that search query would be stored at items 126, and the aspects associated with those items and item listings (e.g., sizes and lengths of the shorts, brands, styles, manufacturer) would be stored at aspects 128. In some embodiments, the multipartite graph 132 is generated based on the prior search queries 124, the items 126, the aspects 128, and the categories 130 (e.g., a leaf category associated with each item).

In some embodiments, the multipartite graph 132 generated for the user is used for another user (e.g., the other user identified as a similar user). For example, the similar user may be identified based on similarities between the past user behavior of these two users being above one or more thresholds (e.g., a threshold for similar query terms and a threshold for similar aspects relating to the similar query terms). As another example, a similar user may be identified based on the two users being within a threshold distance (e.g., based on GPS data from user devices of the two users, based on shipping addresses of the two users). In yet another example, a similar user may additionally be identified based on a language and country or town of origin, wherein the country and town of origin are different from a current shipping address. In some embodiments, the multipartite graph 132 is generated for one or more users based on past user behavior of all past user behavior or a portion of all past user behavior stored in database 120. Further, the multipartite graph generated using the past user behavior of the first user can be updated with additional past user behavior data from the second user, in some embodiments. In some embodiments, multipartite graphs are updated based on past user behavior within a particular range of time (e.g., past user behavior within the past six months). In some embodiments, multipartite graphs are updated based on receiving additional user behavior as the user interacts with the search engine 108. Updated multipartite graphs can be stored at database 120.

Accordingly, the multipartite graph can include two or more sets of nodes. In an embodiment wherein the multipartite graph is a tripartite graph, the tripartite graph can include nodes for the prior search queries, nodes for the items associated with the prior search queries, and nodes for the aspects of those items. Nodes for the prior search queries can be connected to the nodes for the items by edges, and the nodes for the items can be connected to the nodes for the aspects by those respective edges. In some embodiments, the edges between the nodes for the prior search queries and the items are dynamic. For example, the dynamic edges can be based on one or more purchases of an item, clicks of an item (e.g., a selection of an item listing or a selection of an image within an item listing), other interaction data (e.g., scrolling within the item listing for a particular period of time, hovering over an image of an item within an item listing for a particular period of time, pauses between scrolling within an item listing that are over a threshold period of time), ratings provided for an item, other types of past user behavior associated with an item, or one or more combinations thereof. Continuing the example, in some embodiments, the edges between the nodes for the items and the aspects are static.

In some embodiments, the multipartite graph is generated using prior search queries having a frequency above a threshold. For example, one or more words of a textual search query may have a frequency above the threshold. That is, one or more of the words for the textual search query (e.g., "red" or "women's") may have been used in multiple search queries provided by the user. As another example, a search query may have been provided by a user a number of times over a threshold. For example, the user may have queried a particular brand or a particular manufacturer over a threshold number of times. As another example, the user may have queried "romance novel" over a threshold number of times. Additionally or alternatively, in some embodiments, the multipartite graph is generated using item listings having a number of prior user interactions over a threshold. For example, the item listings used to generate the multipartite graph are each item listings having a particular number of views or clicks, for example. As another example, the item listings used to generate the multipartite graph are each item listings having a particular number of prior user purchases. In yet another example, the item listings used to generate the multipartite graph each have a particular rating from other users (e.g., above a threshold number or within a particular range).

The node embedding component 114 implements node embedding model 134 (e.g., node2vec) to determine vector representations of the nodes of the multipartite graph 132. For example, the node embedding algorithm can create k-length property embeddings. In some embodiments, a node2vec is used to perform a series of random walks from each node in the multipartite graph 132 and can further utilize the resulting walks as inputs into a classifier 136 (e.g., a K-Nearest Neighbor algorithm) utilized by the classifier component 116 of the aspect identification module 110 to find a K closest neighbor to a query or aspect associated with a true intent of the user during a current search query. In some embodiments, the node embedding algorithm determines a set of vector representations for the prior search queries 124, a set of vector representations for the items 126 associated with the prior search queries, and a set of vector representations for the aspects 128 associated with the items. In some embodiments, the node embedding algorithm determines a set of vector representations for the categories 130 corresponding to the items. In some embodiments, this set of vector representations are for leaf categories.

Node embedding model 134 can use one or more parameters to determine the vector representations, such as a length of a walk from each node, a number of walks per node, a size of an embedding, a likelihood of returning to a prior node, a likelihood of moving further from an initial node, other parameters, or one or more combinations thereof. Further, in some embodiments, one or more vector representations can be generated based on weighting associated with nodes. For example, nodes corresponding to search queries having a particular frequency (e.g., the search query provided by the user a number of times over a threshold) can be weighted differently than the query nodes having lower frequencies. In some embodiments, a Euclidean distance measurement or cosine similarity measurement may be used to identify distances between one or more vector representations, or threshold level distances between vector representations. Furthermore, the node embedding model 134 can be updated and stored in database 120 based on receiving additional user behavior data associated with additional search queries.

As such, the aspect identification module 110 can identify an aspect based on receiving the search query and by using one or more combinations of the multipartite graphing component 112, the node embedding component 114, and the classifier component 116. That is, in some embodiments, the aspect identification module 110 can identify an aspect based on the set of vector representations for the prior search queries 124, the set of vector representations for the items 126, the set of vector representations for the aspects 128, the set of vector representations for the categories 130, another set of vector representations, or one or more combinations thereof. In some embodiments, the aspect identification module 110 can identify an aspect based on one or more of the vector representations for the prior search queries 124, one or more vector representations for the items 126, one or more vector representations for the aspects 128, one or more vector representations for the categories 130, another vector representation, or one or more combinations thereof.

Search result generator 118 can generate search results based on one or more aspects identified by the aspect identification module 110. For example, the search result generator 118 can generate search results that can be displayed on presentation component(s) 1008 of FIG. 10 with reference to computing device 1000. In some embodiments, the search results can be generated by search result generator 118 based on a query expansion performed via search engine 108 using the aspect identified by aspect identification module 110. For example, the query may be expanded based on a node or vector representation associated with the aspect identified using the multipartite graphing component 112 and the node embedding component 114, or multiple combinations thereof. Continuing the example, the query expansion may be based on a contextual relevance between the vector representation of the aspect and the vector representation of the query.

In some embodiments, the search results provided are grouped based on the aspect identified. As a non-limiting example, if the aspect identified for the search query is "work wear" for clothing items, the groupings of the search results may include "business casual" and "business professional." As another example, if the aspect identified for the search query is "sea life" for jewelry items, the groupings of the search results may include "dolphins" and "starfish." In yet another example, if the aspect identified for the search query is "gold" for jewelry items, the groupings of the search results may include "10 karat gold" and "14 karat gold."

Having identified various components of operating environment 100, it is noted that any number of components may be employed to achieve the desired functionality within the scope of the present disclosure. Although the various components of FIG. 1 are shown with lines for the sake of clarity, in reality, delineating various components is not so clear, and metaphorically, the lines may more accurately be grey or fuzzy. Further, although some components of FIG. 1 are depicted as single components, the depictions are intended as examples in nature and in number and are not to be construed as limiting for all implementations of the present disclosure. Other arrangements and elements (e.g., machines, interfaces, functions, orders, and groupings of functions, etc.) can be used in addition to or instead of those shown, and some elements may be omitted altogether. Thus, it is reiterated that the operating environment 100 is but one example. In another example, functions of aspect identification module 110 are performed at user device 102, while in another example, one or more functions of the aspect identification module 110 are performed at user device 102 along with one or more functions being performed by search engine 108 in any combination. All such embodiments are intended to be within the scope of this disclosure.

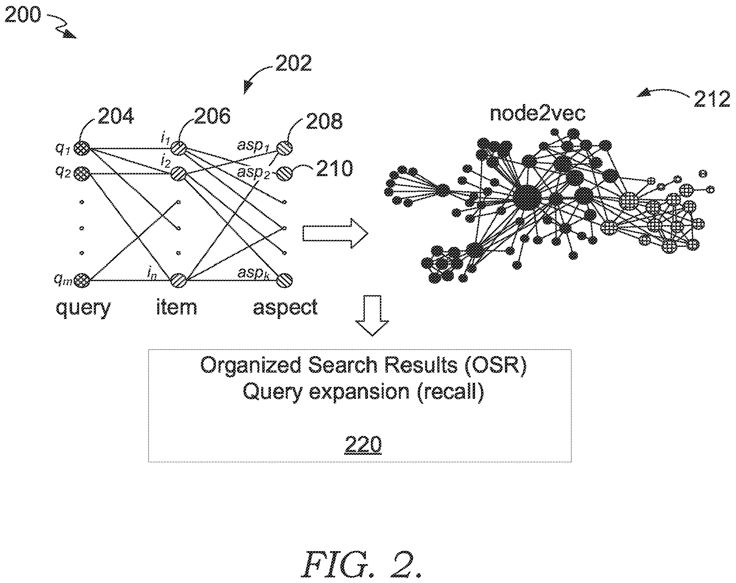

With regard to FIG. 2, example operating environment 200 comprises a tripartite graph 202 that maps prior search queries to items (associated with those queries) and aspects (of the items from the prior user queries). As illustrated in example operating environment 200, a prior search query node 204 is mapped to an item node 206, which is mapped to an aspect node 210. In example operating environment 200, the prior search query node 204 is mapped to three item nodes (including item node 206), the item node 206 is mapped to three aspect nodes (including aspect node 210), and aspect node 208 is mapped with two item nodes. As such, the tripartite graph 202 comprises a plurality of nodes for prior search queries, a plurality of nodes for items relating to the prior search queries, and a plurality of nodes for aspects of the items. Nodes within the tripartite graph 202 are connected by edges, and the connections represent, in some embodiments, contextual relatedness between the connected nodes.

In some embodiments, the tripartite graph 202 has dynamic edges between the nodes for the prior search queries and the items, and static edges between the nodes for the items and the aspects. In other embodiments wherein the multipartite graph includes nodes for categories (e.g., leaf categories), the multipartite graph may have static edges between the nodes for the items and the categories, or static edges between the nodes for the aspects and the categories. In the embodiments having the dynamic edges between the nodes for the prior search queries and the items, the dynamic edges may be based on a type of user interaction with the items or a frequency of the user interaction with the items. For example, the dynamic edges can be weighted based on a frequency of the user interaction with the items. Continuing the example, the frequency may be associated with scrolling, pauses between scrolling that are over a threshold period of time, hovering over an image of the item, a number of purchases of the item, a number of views of the item, a number of reviews of the item, a rating of the item, other user interaction data, or one or more combinations thereof.

In some embodiments, the user interaction data with the item corresponds to user interaction with an item listing of the item. For example, an item listing can include a textual description of an item for sale on an online marketplace. In embodiments, the item may be a tangible item (e.g., a deck of cards), an intangible item (e.g., software), or something that has a distinct and separate existence from other things (e.g., a subscription to an audible book collection for a period of time). Further, the textual description of the item listing may include a condition of the item, one or more ratings of the item (e.g., ratings provided by an online marketplace user or buyer), a pattern on material of the item, an identifier for the item (e.g., a batch number, a catalog number, a serial number, a part number), a brand, a style, a size, a seller identifier (e.g., a unique identifier associated with a particular seller), a color, an available quantity, a price (e.g., list price, sale price, current auction price, current bid price), a number of the items previously sold, other item description information (e.g., other description information related to sale, purchase, or user-interaction with the item listing), or one or more combinations thereof.

In some embodiments, the tripartite graph 202 is generated using interaction data for a user corresponding to a current search query. For example, the tripartite graph 202 can be generated for a particular user based on past user behavior of that particular user. In some embodiments, the past user behavior for that user is identified based on a user profile of the user, user login-credentials, a physical shipping address corresponding to the user, a credit card number, another type of user identifier (e.g., a user device identifier, such as a unique device ID), or one or more combinations thereof. In some embodiments, the tripartite graph 202 can be generated for a plurality of various users based on past user behavior of users (e.g., wherein the number of the users is above a threshold). In other embodiments, the tripartite graph 202 is generated using interaction data from a plurality of similar users identified by user profiles or past user behavior data having a frequency above a threshold. For example, each of the plurality of similar users may have a particular number of prior user interactions with a threshold number of similar or identical items. In one non-limiting example, a current search query may include "dairy products" and the plurality of similar users may include users who each purchased a threshold number of cheese products and a threshold number of milk products. As another example, the plurality of similar users for generating the tripartite graph 202 may include similar users identified based on a shipping address. To illustrate, each of the plurality of similar users may have a shipping address on the same street or within the same neighborhood.

In example operating environment 200, a node embedding algorithm 212 (e.g., a node2vec) is applied to the tripartite graph 202 for determining vector representations of nodes of the tripartite graph 202. For example, node embedding algorithm 212 can determine a vector representation for one or more prior search query nodes (e.g., prior search query node 204), one or more item nodes (e.g., item node 206), one or more aspect nodes (e.g., aspect node 208), one or more other node types (e.g., category nodes), or one or more combinations thereof. The node embedding algorithm 212 can determine vector representations that characterize nodes and corresponding edges for the nodes of the tripartite graph 202. Vector representations can be compared to identify one or more nearby vector representations. Additionally or alternatively, vector representations can be compared for determining a nearest vector representation or for identifying vector representations within a threshold distance, for example.

Based on using the tripartite graph 202 and node embedding algorithm 212 to determine one or more aspects associated with a current search query. For example, the aspect can be determined based on a vector representation being with a threshold distance of a vector representation corresponding to the current search query. In some embodiments, the one or more aspects are determined using the aspect identification module 110 of FIG. 1. As such, based on identifying one or more aspects for a current search query, organized search results can be provided (e.g., via a presentation component of a computing device) at 220. As one example, the search results may be presented in a particular order based on a distance between a vector representation of each respective search result provided and a vector representation corresponding to the current search query. Additionally or alternatively, the one or more aspects identified can be used for one or more query expansions associated with the current search query at 220. As one non-limiting and illustrative example, if the search query is "cat collar with GPS tracker" and the aspect identified "affordable" or "fast shipping," a query expansion may include cat collars with other types of tracking technology to include more "affordable" or "fast shipping" search results.

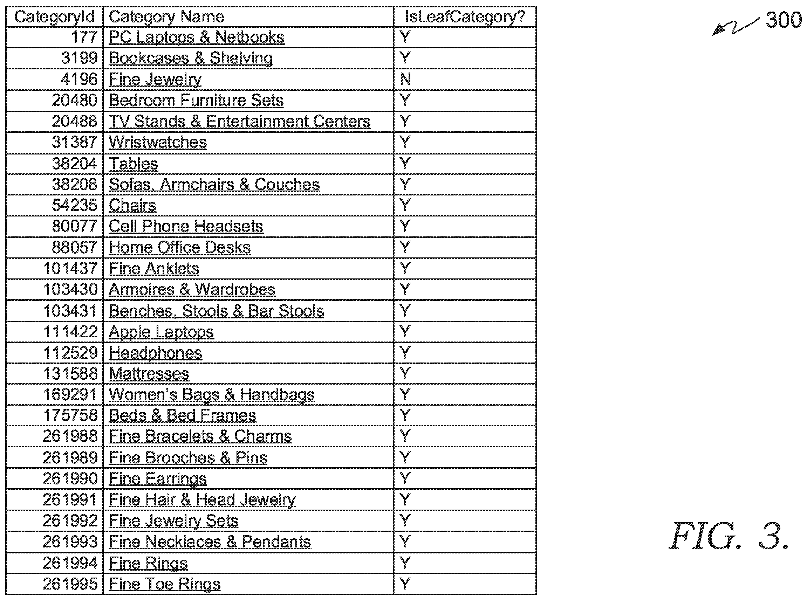

With regard to FIG. 3, example table 300 can be used for generating a multipartite graph having nodes for prior search queries, items from the prior search queries, aspects of the items, categories of the items, or one or more combinations thereof. For example, table 300 has a category identifier column, a category name column, and a column identifying whether the associated category identifier and name correspond to a leaf category. In some embodiments, the table 300 is generated based on prior user interactions with items from prior search queries. In some embodiments, the aspect nodes generated for the multipartite graph from table 300 are based on one or more particular categories (e.g., user-selected categories). In some embodiments, a multipartite graph is generated for each selected category (e.g., a tripartite graph for fine rings and a tripartite graph for fine toe rings, wherein each of the multipartite graphs have nodes for prior search queries, at least one item for each of the prior search queries, and at least one aspect for each of the items).

In some embodiments, one or more tables (e.g., table 300) are generated based on past user behavior data for at least one particular user, and the generated tables may be stored as an index (e.g., a reverse index, a forward index, another type of index, or one or more combinations thereof). In some embodiments, the table data is bulk loaded (e.g., via a connector) onto the index. In some embodiments, the table data may include n-gram based and entity-based selection streams, wherein the table is keyed off n-grams or entities derived from item listings that a user has interacted with, for example. In some embodiments, table leverages artificial intelligence text recognition for entity-based generation, category-based generation, another type of generation, or one or more combinations thereof. In some embodiments, table 300 is ordered based on the category identifier column. In other embodiments, table 300 is ordered based on past user behavior data (e.g., categories having the most user interactions listed at the top). In some embodiments, table 300 includes categories having user interactions that are above a threshold.

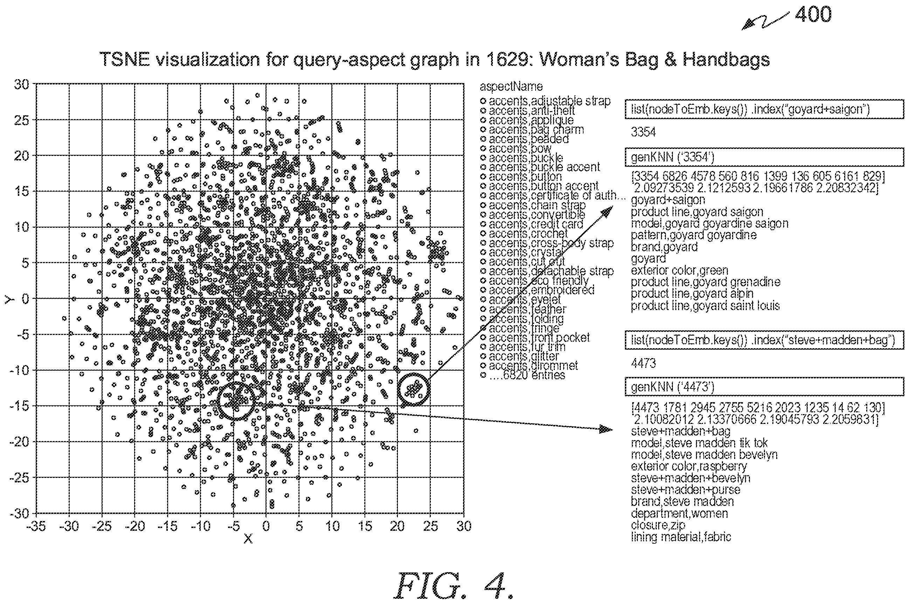

With regard to FIG. 4, example environment 400 comprises a t-distributed stochastic neighbor embedding (t-SNE) visualization of prior search queries and related aspects for the leaf category of "women's bags & handbags." For example, aspects associated with accents of the women's bags & handbags items in example environment 400 include the following: adjustable strap, anti-theft, applique, bag charm, beaded, bow, buckle, buckle accent, button, button accent, certificate of authenticity, chain strap, convertible, credit card, crochet, cross-body strap, crystal, cut out, detachable strap, eco-friendly, embroidered, eyelet, feather, folding, fringe, front pocket, fur trim, glitter, grommet, and other accent aspects. At a cluster group of nodes located between X(20 to 25) and Y(-10 to -15), the k-nearest neighbors to node '3354' include a Goyard Goyardine Saigon product line aspect and an exterior green color aspect. At another cluster group of nodes located between X(-10 to 0) and Y(-20 to -10), the k-nearest neighbors to node '4473' include a Steve Madden product line aspect, a raspberry exterior color aspect, a zip closure aspect, and a fabric lining material aspect. In embodiments, the aspects were identified using aspect identification module 110 of FIG. 1. In some embodiments, the aspects were identified using tripartite graph 202 and node embedding algorithm 212 of FIG. 2.

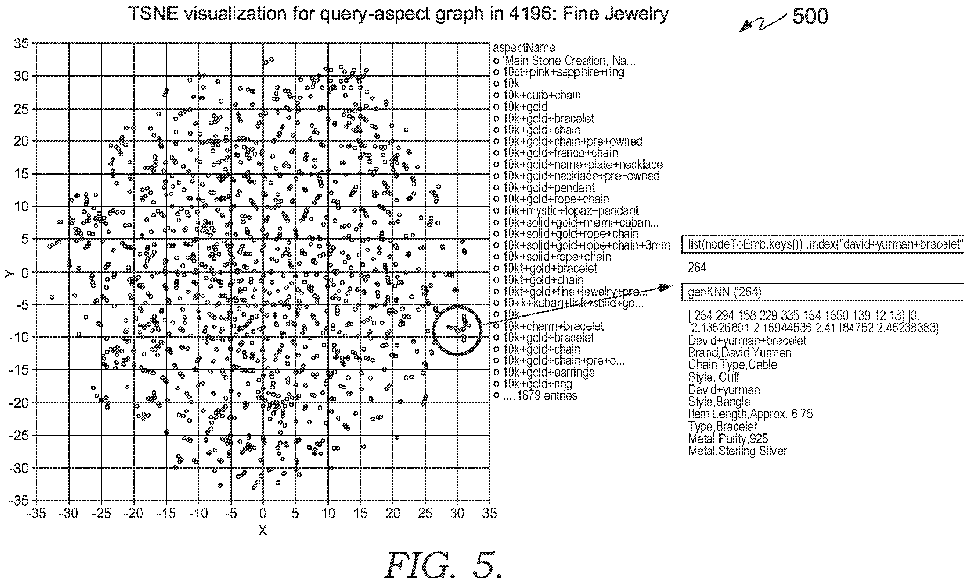

With regard to FIG. 5, example environment 500 comprises a t-distributed stochastic neighbor embedding (t-SNE) visualization of prior search queries and related aspects for the non-leaf category of "fine jewelry." For example, aspects associated with the fine jewelry items in example environment 500 include the following: main stone natural creation, 10k pink sapphire ring, 10k, 10k curb chain, 10k gold, 10k gold bracelet, 10k gold chain, 10k gold chain preowned, 10k gold Franco chain, 10k gold name plate necklace, 10k gold pendant, 10k gold rope chain, 10k mystic topaz pendant, 10k solid gold Miami Cuban, 10k solid gold rope chain, 10k solid rope chain, 10k gold bracelet, 10k gold chain, 10k charm bracelet, and other fine jewelry aspects. At a cluster group of nodes located between X(25 to 35) and Y(-5 to -15), the k-nearest neighbors to node '264' include a David Yurman brand aspect, a cable chain type aspect, a cuff style aspect, a bangle style aspect, a length aspect, a bracelet type aspect, a metal type aspect, and a metal purity aspect. In embodiments, the aspects were identified using aspect identification module 110 of FIG. 1. In some embodiments, the aspects were identified using tripartite graph 202 and node embedding algorithm 212 of FIG. 2.

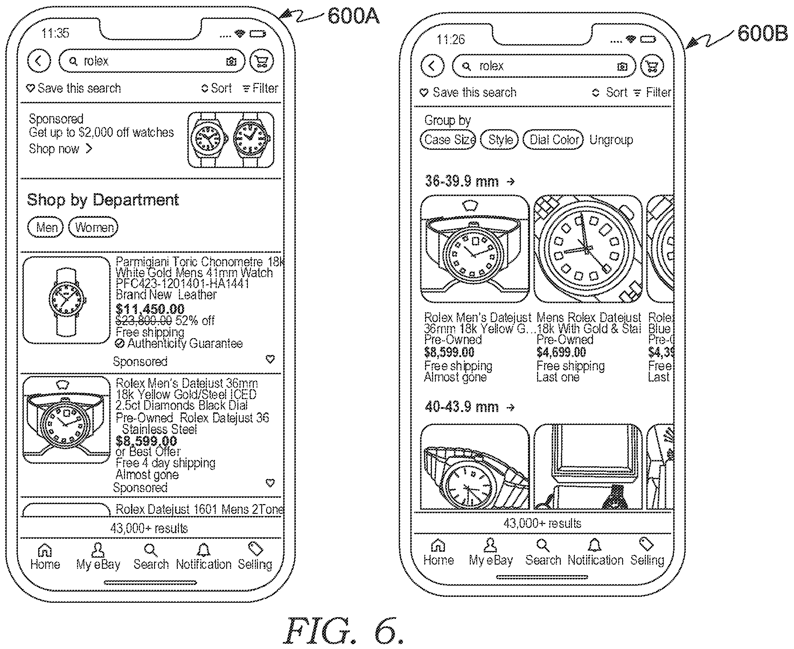

With regard to FIG. 6, search results are provided via a display (e.g., presentation component 1008 of FIG. 10) at computing device 600A and computing device 600B. For example, a search query "Rolex" is entered at a search bar, and the search results are generated based on one or more aspects identified by using a multipartite graph, node embedding algorithm, and past user behavior. Computing device 600A provides the search results in a list view. For example, the search results may be presented in an order based on a vector representation of an aspect for a first search result having a closest proximity to a vector representation of an aspect associated with "Rolex." In some embodiments, the aspect having a vector representation with the closest proximity to the vector representation of the aspect of the Rolex is a Parmigiani Fleurier brand aspect. In some embodiments, the aspect having the vector representation with the closest proximity is a Parmigiani Fleurier toric chronometre aspect. In some embodiments, the aspect having the vector representation with the closest proximity is 18k white gold men's 41 mm aspect. In some embodiments, more than one vector representations of aspects are closest in proximity to the aspect vector representation for the Rolex. In some embodiments, a first aspect vector representation (determined from past user behavior) is within a threshold distance of a first aspect corresponding to the Rolex search query, and a second aspect vector representation is within a threshold distance of a second aspect corresponding to the Rolex search query.

Computing device 600B provides search results that are grouped based on one or more identified aspects. For example, in this embodiment, the search results can be grouped based on "case size," "style," "dial color," another aspect-based grouping, or one or more combinations thereof. As illustrated in FIG. 6, computing device 600B also provides each of the grouping options as selectable options, and an "ungrouping" selectable option. Computing device 600B provides the search results based on the "case size" grouping. For example, the search results are organized in a first and second portion on the display, the first portion based on a 36-39.9 mm size grouping and the second portion based on a 40-43.9 mm size grouping. As another example, a third portion could include a 44-47.9 mm size grouping. In some embodiments, the selectable grouping options are determined based on an identified aspect (e.g., corresponding to a single item or corresponding to a number of items above a threshold). In some embodiments, each of the selectable grouping options are determined based on a different identified aspect corresponding to the same item. In some embodiments, each of the selectable grouping options are determined based on a different identified aspect corresponding to a plurality of related items.

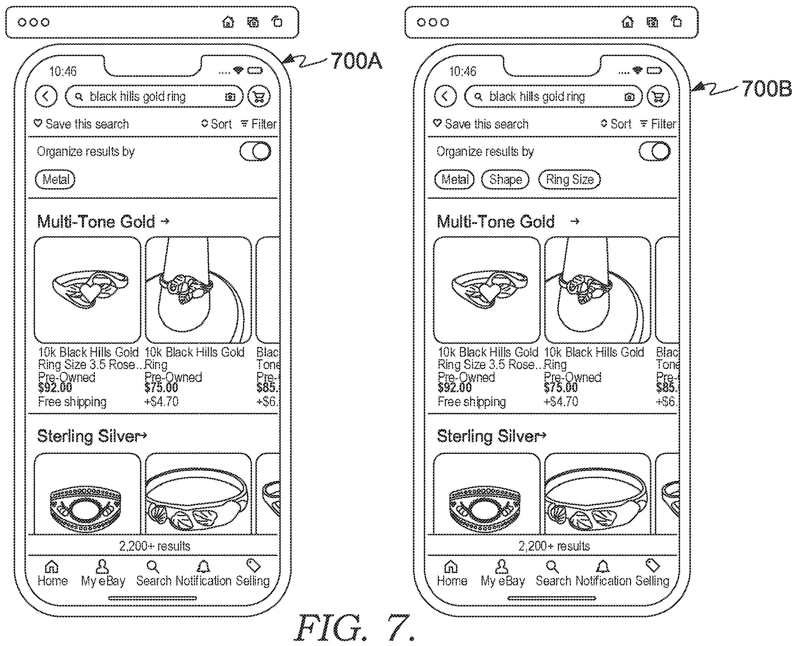

With regard to FIG. 7, search results and selectable grouping options are provided via a display (e.g., presentation component 1008 of FIG. 10) at computing device 700A and computing device 700B. For example, a search query "Black Hills gold ring" is received by a search engine, and the search engine generates search results based on identifying one or more aspects using a multipartite graph, node embedding algorithm, and past user behavior. At computing device 700A, the search results are organized and presented based on a type of metal (e.g., multi-tone gold, sterling silver, rose gold, 18k gold, or another type of metal). At computing device 700B, in addition to the "metal" grouping, a selectable option to group the search results by "shape" or "ring size" is also provided. As such, computing device 700B may receive a selection of one or more of the selectable options for grouping the search results.

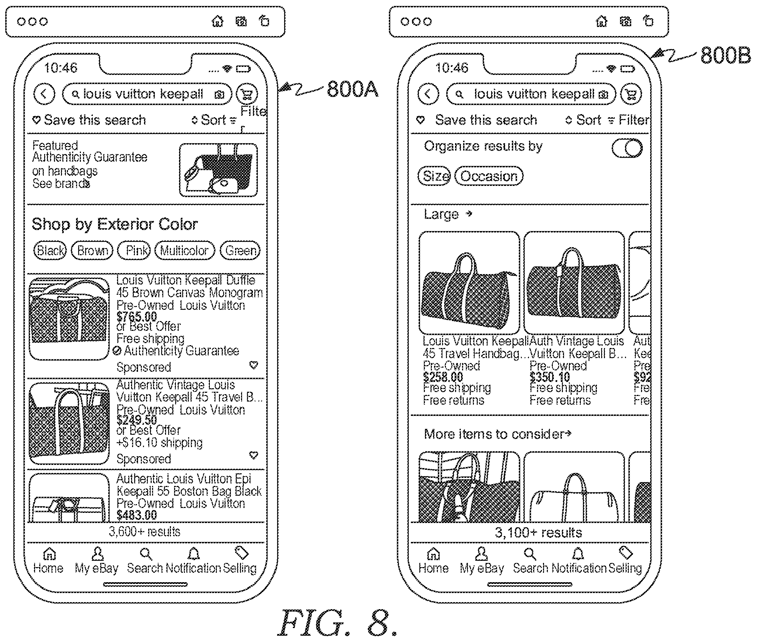

With regard to FIG. 8, search results are organized, grouped, and provided via a display (e.g., presentation component 1008 of FIG. 10) at computing device 800A and computing device 800B. For example, a search query "Louis Vuitton keepall" is received by a search engine, and the search engine generates search results based on identifying one or more aspects using a multipartite graph, node embedding algorithm, and past user behavior. At computing device 800A, the search results are organized and presented, and selectable options for reorganizing the search results are also provided. For example, computing device 800A provides the following grouping options for organization based on exterior color: black, brown, pink, multicolor, green, another color, or one or more combinations thereof. At computing device 800B, the search results are organized by size, and in addition to the "size" grouping, a selectable option to group the search results by "occasion" is also provided. As such, computing devices 800A and 800B may each receive a selection of one or more of the selectable options for grouping the search results.

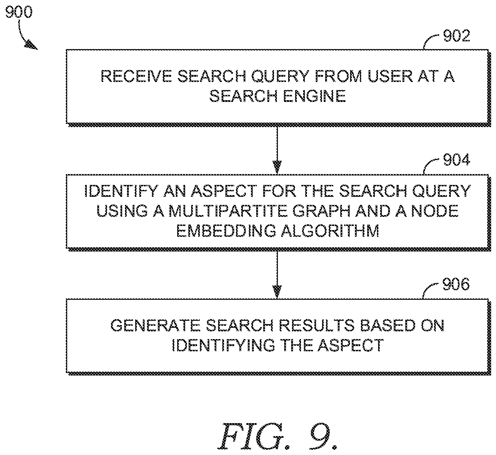

With regard to FIG. 9, example flowchart 900 illustrates an example method for providing search results based on using a multipartite graph and a node embedding algorithm. At 902, a search query is received (e.g., by a search engine, at a search bar, via an audio input, via an image input) from a user. At 904, one or more aspects are identified using a multipartite graph (e.g., a bipartite graph, a tripartite graph, a quadripartite graph) and node embedding algorithm.

The multipartite graph can be generated using past user behavior (e.g., of the user providing the search query). In embodiments, the past user behavior corresponds to one or more of: prior search queries, items associated with the prior search queries, aspects associated with the items, and categories associated with the aspects. In some embodiments, the multipartite graph has nodes for prior search queries, nodes for items corresponding to the prior search queries, and nodes for aspects corresponding to the items. In some embodiments, the multipartite graph has static edges between the nodes for the items and aspects. Additionally or alternatively, the multipartite graph may have dynamic edges between the nodes for the prior search queries and the items. In some embodiments, the multipartite graph is generated using the past user behavior including prior search queries associated with the search query, the prior search queries having a frequency above a threshold. In some embodiments, the past user behavior also includes item listings associated with the prior search queries, the item listings each having a number of prior user interactions that is above another threshold.

The node embedding algorithm can determine vector representations of the nodes of the multipartite graph. In some embodiments, the aspect is identified based on a first vector representation for the aspect and a second vector representation for the search query. In some embodiments, the aspect is identified based on a third vector representation for an item (corresponding to the aspect and the search query). For example, the third vector representation can be generated using the multipartite graph and the node embedding algorithm. In some embodiments, a tripartite graph is generated by determining, using the node embedding algorithm, a first set of vector representations for the prior search queries, a second set of vector representations for the items associated with the prior search queries, and a third set of vector representations for the aspects associated with the items. Continuing the example, each of the prior search queries used to generate the tripartite graph may have a frequency above a threshold. Additionally, each of the items used to generate the tripartite graph may correspond to an item listing having a number of prior user interactions that is above a threshold.

At 906, search results are generated based on identifying the aspect for the search query. For example, the search results can be generated based on performing a query expansion using the aspect. In some embodiments, the search results are provided via one or more search result groupings based on identifying one or more aspects. For example, a second aspect can be identified using the multipartite graph and the node embedding algorithm, and the two identified aspects can be provided as selectable options. As such, the search results can be provided based on receiving a selection of one of the selectable options. In embodiments wherein the multipartite graph has nodes for categories corresponding to the aspects from the items of the prior search queries, one or more categories (identified using the multipartite graph and node embedding algorithm) and one or more aspects can be provided as selectable options. As such, search results can be provided based on receiving one or more selections of the selectable options. In some embodiments, the one or more aspect selectable options and the one or more category selectable options can be provided based on performing a query expansion using the one or more categories.

Having described an overview of embodiments of the present technology, an example operating environment in which embodiments of the present technology may be implemented is described below in order to provide a general context for various aspects. Referring initially to FIG. 10, in particular, an example operating environment for implementing embodiments of the present technology is shown and designated generally as computing device 1000. Computing device 1000 is but one example of a suitable computing environment and is not intended to suggest any limitation as to the scope of use or functionality of the technology. Neither should computing device 1000 be interpreted as having any dependency or requirement relating to any one or combination of components illustrated.

The technology of the present disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 10, computing device 1000 includes bus 1002 that directly or indirectly couples the following devices: memory 1004, one or more processors 1006, one or more presentation components 1008, input/output ports 1010, input/output components 1012, and illustrative power supply 1014. Bus 1002 represents what may be one or more busses (such as an address bus, data bus, or combination thereof). Although the various blocks of FIG. 10 are shown with lines for the sake of clarity, in reality, delineating various components is not so clear, and metaphorically, the lines would more accurately be grey and fuzzy. For example, one may consider a presentation component, such as a display device, to be an I/O component. As another example, processors may also have memory. Such is the nature of the art, and it is again reiterated that the diagram of FIG. 10 is merely illustrates an example computing device that can be used in connection with one or more embodiments of the present technology. Distinction is not made between such categories as "workstation," "server," "laptop," "hand-held device," etc., as all are contemplated within the scope of FIG. 10 and reference to "computing device."

Computing device 1000 typically includes a variety of computer-readable media. Computer-readable media can be any available media that can be accessed by computing device 1000 and includes both volatile and nonvolatile media, and removable and non-removable media. By way of example, and not limitation, computer-readable media may comprise computer storage media and communication media.

Computer storage media include volatile and nonvolatile, removable and non-removable media implemented in any method or technology for storage of information, such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 1000. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media.

Memory 1004 includes computer storage media in the form of volatile or nonvolatile memory. The memory 1004 may be removable, non-removable, or a combination thereof. Example hardware devices include solid-state memory, hard drives, optical-disc drives, etc. Computing device 1000 includes one or more processors that read data from various entities such as memory 1004 or I/O components 1012. Presentation component(s) 1008 present data indications to a user or other device. Examples of presentation components include a display device, speaker, printing component, vibrating component, etc.

I/O ports 1010 allow computing device 1000 to be logically coupled to other devices including I/O components 1012, some of which may be built in. Illustrative components include a microphone, joystick, game pad, satellite dish, scanner, printer, wireless device, and so forth.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the word "including" or "having" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media.

In addition, words such as "a" and "an," unless otherwise indicated to the contrary, include the plural as well as the singular. Thus, for example, the constraint of "a feature" is satisfied where one or more features are present. Furthermore, the term "or" includes the conjunctive, the disjunctive, and both (*a* or *b* thus includes either *a* or *b,* as well as *a* and *b*)*.*

For purposes of a detailed discussion above, embodiments of the present technology described with reference to a distributed computing environment; however, the distributed computing environment depicted herein is merely an example. Components can be configured for performing novel aspects of embodiments, where the term "configured for" or "configured to" can refer to "programmed to" perform particular tasks or implement particular abstract data types using code. Further, while embodiments of the present technology may generally refer to the distributed data object management system and the described schematics, it is understood that the techniques described may be extended to other implementation contexts.

From the foregoing, it will be seen that this technology is one well adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated the accompanying drawings is to be interpreted as illustrative and not in a limiting sense.

Some example aspects of the technology that may be practiced from the forgoing disclosure include the following:
Aspect 1: A computer-implemented method comprising: receiving a search query from a user at a search engine; identifying an aspect corresponding to the search query based on a first vector representation for the aspect and a second vector representation for the search query, the first vector representation and the second vector representation generated using: a multipartite graph generated using past user behavior; and a node embedding algorithm for determining vector representations of nodes of the multipartite graph; and generating search results based on identifying the aspect.
Aspect 2: Aspect 1, wherein the multipartite graph has nodes for prior search queries, items corresponding to the prior search queries, and aspects corresponding to the items.
Aspect 3: Aspect 1 or 2, wherein the multipartite graph has static edges between the nodes for the items and the aspects and dynamic edges between the nodes for the prior search queries and the items.
Aspect 4: Aspect 1, 2, or 3, wherein the aspect is identified based on a third vector representation for an item corresponding to the aspect and the search query, wherein the third vector representation is generated using the multipartite graph and the node embedding algorithm.
Aspect 5: Aspect 1, 2, 3, or 4, wherein generating the search results based on identifying the aspect comprises performing query expansion using the aspect.
Aspect 6: Aspect 1, 2, 3, 4, or 5, wherein generating the search results based on identifying the aspect comprises providing one or more search result groupings based on the aspect.
Aspect 7: Aspect 1, 2, 3, 4, 5, or 6, wherein providing the one or more search result groupings based on the aspect comprises: identifying a second aspect using the multipartite graph and the node embedding algorithm; providing the aspect and the second aspect as selectable options; receiving a selection of one of the selectable options; and providing the search results based on the selection.
Aspect 8: Aspect 1, 2, 3, 4, 5, 6, or 7, wherein the multipartite graph is generated using the past user behavior including prior search queries associated with the search query, the prior search queries having a frequency above a first threshold.
Aspect 9: Aspect 1, 2, 3, 4, 5, 6, 7, or 8, wherein the past user behavior includes item listings associated with the prior search queries, the item listings each having a number of prior user interactions that is above a second threshold.
Aspect 10: a computer system comprising: a processor; and a computer storage medium storing computer-useable instructions that, when used by the processor, causes the computer system to perform operations comprising: receiving a search query from a user; identifying an aspect corresponding to the search query using: a tripartite graph generated using past user behavior, the past user behavior corresponding to prior search queries, items associated with the prior search queries, and aspects associated with the items; and a node embedding algorithm for determining vector representations of nodes of the tripartite graph; and generating search results based on identifying the aspect.
Aspect 11: Aspect 10, wherein the tripartite graph is generated by determining, using the node embedding algorithm, a first set of vector representations for the prior search queries, a second set of vector representations for the items associated with the prior search queries, and a third set of vector representations for the aspects associated with the items.
Aspect 12: Aspect 10, or 11, wherein each of the prior search queries used to generate the tripartite graph have a frequency above a threshold.
Aspect 13: Aspect 10, 11, or 12, wherein each of the items used to generate the tripartite graph correspond to an item listing having a number of prior user interactions that is above a threshold.
Aspect 14: Aspect 10, 11, 12, or 13, wherein the tripartite graph has dynamic edges between the nodes for the prior search queries and the items.
Aspect 15: Aspect 10, 11, 12, 13, or 14, wherein the tripartite graph has static edges between the nodes for the items and the aspects.
Aspect 16: one or more computer storage media storing computer-useable instructions that, when used by a computing device, cause the computing device to perform operations, the operations comprising: receiving a search query from a user at a search engine; identifying an aspect corresponding to the search query based on a vector representation for the aspect, the vector representation generated using: a multipartite graph generated using past user behavior, the multipartite graph having nodes for prior search queries and aspects corresponding to the prior search queries; and a node embedding algorithm for determining vector representations of the nodes of the multipartite graph; and generating search results based on identifying the aspect.
Aspect 17: Aspect 16, wherein the multipartite graph has nodes for categories corresponding to the aspects, and wherein providing the search results comprises: identifying a category corresponding to the search query using the multipartite graph and the node embedding algorithm; providing the aspect and the category as selectable options; receiving a selection of one of the selectable options; and providing the search results based on the selection.
Aspect 18: Aspect 16, or 17, wherein the aspect and the category are provided as the selectable options based on performing query expansion using the category.
Aspect 19: Aspect 16, 17, or 18, wherein the aspect is identified based on a second vector representation for an item corresponding to the aspect and the search query and a third vector representation for the search query.
Aspect 20: Aspect 16, 17, 18, or 19, wherein the past user behavior includes item listings associated with the prior search queries, each of the item listings having a number of prior user purchases that is above a threshold, and wherein the multipartite graph has nodes corresponding to the item listings.

## Claims

1. A computer-implemented method comprising:
receiving a search query from a user at a search engine;
identifying an aspect corresponding to the search query based on a first vector representation for the aspect and a second vector representation for the search query, the first vector representation and the second vector representation generated using:
a multipartite graph generated using past user behavior; and
a node embedding algorithm for determining vector representations of nodes of the multipartite graph; and
generating search results based on identifying the aspect.

2. The computer-implemented method of claim 1, wherein the multipartite graph has nodes for prior search queries, items corresponding to the prior search queries, and aspects corresponding to the items; wherein the multipartite graph may have static edges between the nodes for the items and the aspects and/or dynamic edges between the nodes for the prior search queries and the items.

3. The computer-implemented method of claim 1 or 2, wherein the aspect is identified based on a third vector representation for an item corresponding to the aspect and the search query, wherein the third vector representation is generated using the multipartite graph and the node embedding algorithm.

4. The computer-implemented method of any one of the preceding claims, wherein generating the search results based on identifying the aspect comprises performing query expansion using the aspect.

5. The computer-implemented method of any one of the preceding claims, wherein generating the search results based on identifying the aspect comprises providing one or more search result groupings based on the aspect.

6. The computer-implemented method of claim 5, wherein providing the one or more search result groupings based on the aspect comprises:
identifying a second aspect using the multipartite graph and the node embedding algorithm;
providing the aspect and the second aspect as selectable options;
receiving a selection of one of the selectable options; and
providing the search results based on the selection.

7. The computer-implemented method of any one of the preceding claims, wherein the multipartite graph is generated using the past user behavior including prior search queries associated with the search query, the prior search queries having a frequency above a first threshold; wherein the past user behavior may include item listings associated with the prior search queries, the item listings each having a number of prior user interactions that is above a second threshold.

8. A computer system comprising:
a processor; and
a computer storage medium storing computer-useable instructions that, when used by the processor, causes the computer system to perform operations comprising:
receiving a search query from a user;
identifying an aspect corresponding to the search query using:
a tripartite graph generated using past user behavior, the past user behavior corresponding to prior search queries, items associated with the prior search queries, and aspects associated with the items; and
a node embedding algorithm for determining vector representations
of nodes of the tripartite graph; and
generating search results based on identifying the aspect.

9. The computer system of claim 8, wherein the tripartite graph is generated by determining, using the node embedding algorithm, a first set of vector representations for the prior search queries, a second set of vector representations for the items associated with the prior search queries, and a third set of vector representations for the aspects associated with the items;
wherein each of the prior search queries used to generate the tripartite graph may have a frequency above a threshold.

10. The computer system of claim 8 or 9, wherein each of the items used to generate the tripartite graph correspond to an item listing having a number of prior user interactions that is above a threshold;
wherein the tripartite graph may have dynamic edges between the nodes for the prior search queries and the items.

11. The computer system of any one of claims 8 to 10, wherein the tripartite graph has static edges between the nodes for the items and the aspects.

12. One or more computer storage media storing computer-useable instructions that, when used by a computing device, cause the computing device to perform operations, the operations comprising:
receiving a search query from a user at a search engine;
identifying an aspect corresponding to the search query based on a vector representation for the aspect, the vector representation generated using:
a multipartite graph generated using past user behavior, the multipartite graph having nodes for prior search queries and aspects corresponding to the prior search queries; and
a node embedding algorithm for determining vector representations of the nodes of the multipartite graph; and
generating search results based on identifying the aspect.

13. The one or more computer storage media of claim 12, wherein the multipartite graph has nodes for categories corresponding to the aspects, and wherein providing the search results comprises:
identifying a category corresponding to the search query using the multipartite graph and the node embedding algorithm;
providing the aspect and the category as selectable options;
receiving a selection of one of the selectable options; and
providing the search results based on the selection.

14. The one or more computer storage media of claim 13, wherein the aspect and the category are provided as the selectable options based on performing query expansion using the category.

15. The one or more computer storage media of any one of claims 12 to 14, wherein the aspect is identified based on a second vector representation for an item corresponding to the aspect and the search query and a third vector representation for the search query;
wherein the past user behavior may include item listings associated with the prior search queries, each of the item listings having a number of prior user purchases that is above a threshold, and wherein the multipartite graph may have nodes corresponding to the item listings.
